# EUROPÄISCHE PATENTANMELDUNG

(11) **EP 1 114 665 A1**
(43) Veröffentlichungstag der Anmeldung: **11.07.2001**
(21) Anmeldenummer: 00100359.9
(22) Anmeldetag: 07.01.2000
(51) Int. Cl.: B01D 37/02, B01D 29/09, B01D 29/60, B01D 29/66

(54) **Anschwemmfiltrierverfahren und -vorrichtung**

(71) Anmelder: Faudi Filtersysteme GmbH, 35260 Stadtallendorf (DE)
(72) Erfinder: Wegner, Axel, Dipl.-Ing., 29336 Nienhagen (DE)
(74) Vertreter: Olbricht, Karl Heinrich, Dipl.-Phys.

(57) **Zusammenfassung**

Ein Verfahren und eine Vorrichtung zur Sekundärschlamm-Aufbereitung beim Filtrieren feindisperser Suspensionen verwendet für eine zu filtrierende Schmutzflüssigkeit, die z.B. aus einem Tank (T) mit einem Rührwerk (R) kommt, eine Zufuhr (Z) an den Eingang (Y1) eines rückspülbaren Filters (F1), bevorzugt eines Klappbandfilters mit umlaufendem Endlos-Gewebeband. Das Filtrat kann über ein Ventil (Y2) in einen Vorschaltbehälter (B1) gelangen. Sobald darin ein gegebener Füllstand oder am Filter (F1) eine vorbestimmte Druckdifferenz erreicht ist, wird das Filtrat bei noch zu verbessernder Qualität in einem Pumpkreislauf (Y7, P1) an den Filtereingang (Y1) zurückgeführt. Bei genügender Filtratgüte wird der Filterausgang über ein Ventil (Y3) auf einen Zwischenbehälter (B2) umgeschaltet, dem eine Rückpump- oder Hebestation (P2, H) zugeordnet sein kann; von dort kommt sauberes Filtrat durch eine Abfuhrleitung (A) zur Verwertung. Die Behälter (B1, B2) können unter Einbau einer Trennwand (W) vereinigt sein. Vor einer Regenerierung des Filters (F1) preßt man den Inhalt des Vorschaltbehälters (B1) zur Tiefenfiltration durch den hoch aufgebauten Filterkuchen hindurch, der dann getrocknet und ausgetragen wird.

## Beschreibung

Die Erfindung betrifft ein Verfahren und eine Vorrichtung zum Filtrieren gemäß den Oberbegriffen von Anspruch 1 und Anspruch 13.

Die Erfindung kann bei allen Prozessen angewandt werden, bei denen eine Sekundärschlamm-Aufbereitung stattfindet, und bei allen Filtrationen mit Rückspülvorgängen. Eine bevorzugte Anwendung der Erfindung ist die Feinfiltration zur Sekundärschlamm-Aufbereitung mit rückspülbaren Filtern, um Prozeßflüssigkeiten wie Kühlwasser, Kühlschmierstoff u.dgl. von Verunreinigungen zu befreien. Typische Einsatzbeispiele sind Walzstraßen für Bleche oder Schleifstationen für Stahlnockenwellen, wobei stark verschmutztes Öl zu filtern ist. Das zu filtrierende Medium gelangt beispielsweise an einen Anschwemmfilter oder an einen rückspülbaren Mikrofilter gemäß DE 37 22 238 C2.

Rückgespülte Flüssigkeit wurde herkömmlich in einem Behälter aufgefangen und von dort aus im Rahmen einer Sekundärschlamm-Aufbereitung über einen Filter, z.B. ein einfaches Filtergewebe, zurück in einen Schmutztank einer Hauptanlage gefördert. Typisch erfolgte ein direkter, einfacher Durchlauf zu dem Filter, auf dem der Feststoff zurückgehalten und anschließend getrocknet wurde. Indem man einen Anschwemmvorgang vorschaltet, läßt sich der anfängliche Filterkuchenaufbau verbessern, doch verschlechtert sich bei dieser Verfahrensweise gegen Ende des Filtriervorgangs die Filtrations-Qualität mit abnehmendem Volumen im Zwischenbehälter durch steigenden Feinkorn-Anteil im Pumpgut. Der zunächst lockere Filterkuchen-Aufbau wird daher durch die Zunahme von Schwebstoff-Anteilen gestört, so daß die Filter-Effizienz immer stärker absinkt.

Zur Abhilfe hat man wohl auch versucht, Zentrifugen einzusetzen, doch erfordert dies relativ hohen Aufwand. Solche Anlagen sind wartungsintensiv und gewährleisten auch nicht unbedingt bessere Trenngrade.

Daher besteht ein Bedürfnis an technischer Weiterentwicklung. Ein wichtiges Ziel der Erfindung ist es, die genannten und weitere Nachteile des Standes der Technik zu überwinden und insbesondere die Sekundärschlamm-Aufbereitung zu intensivieren. Mit möglichst wirtschaftlichen Mitteln sollen die Filterstandzeiten verlängert werden, ohne daß die Filtratgüte leidet; diese soll tunlichst gesteigert werden.

Hauptmerkmale der Erfindung sind in Anspruch 1 und Anspruch 13 angegeben. Ausgestaltungen sind Gegenstand der Ansprüche 2 bis 12 sowie 14 bis 21.

Bei einem Verfahren zur Sekundärschlamm-Aufbereitung beim Filtrieren von Suspensionen, unter Verwendung eines die zu filtrierende Flüssigkeit enthaltenden Behälters, dem in einem Pumpkreislauf ein Filter nachgeordnet ist, sieht die Erfindung gemäß dem kennzeichnenden Teil von Anspruch 1 vor, daß als Filter ein rückspülbarer Anschwemmfilter benutzt wird, daß dessen während einer Anschwemmphase abgehendes Filtrat bis zum Erreichen eines Vorgabewertes zwischengespeichert wird und daß in einer folgenden Filterphase Filtrat durch Weg-Umleitung zur Verwertung abgeführt wird. Die neuartige Prozeßführung bewirkt mit sehr geringem Aufwand eine beträchtliche Steigerung des Wirkungsgrades der Filtration. Man kann den Filterkuchen erheblich besser als bisher aufbauen und verhindert eine Aufkonzentration von Feinstpartikeln im System. Der Schwebstoff-Anteil im Pumpgut geht in kurzer Zeit auf noch akzeptable Minimalwerte zurück.

Eine sehr vorteilhafte Weiterbildung des Verfahrens besteht laut Anspruch 2 darin, daß als Vorgabewerte der am Filter herrschende Differenzdruck und/oder der Füllstand eines Vorschaltbehälters eingestellt bzw. abgetastet werden, dem das in der Anschwemmphase vom Filter abgehende Filtrat zugeleitet wird.

Eine Vorrichtung zur Sekundärschlamm-Aufbereitung nach diesem Verfahren, mit einem die zu filtrierende Flüssigkeit enthaltenden Behälter, dem in einem Pumpkreislauf eine Zufuhrleitung zu einem Filter mit absperrbarem Filtereingang nachgeordnet ist, zeichnet sich laut Anspruch 13 erfindungsgemäß dadurch aus, daß der Filter ein rückspülbarer Anschwemmfilter ist, dem ein während einer Anschwemmphase Filtrat aufnehmender Vorschaltbehälter zugeordnet ist, daß Vorgabewerte für dessen Füllstand sowie den am Filter herrschenden Differenzdruck einstell- bzw. abtastbar sind und daß in einer Filterphase vorgabeabhängig Wege umsteuerbar sind, auf denen das Filtrat entweder an den Filtereingang zurück- oder zur weiteren Verwertung abströmt. Der apparative Aufwand für die damit auf überraschend einfache Weise erzielbare große Qualitätssteigerung der Filtration ist überaus gering.

Zweckmäßig ist gemäß Anspruch 3 bzw. 15 am Filter ein Differenzdruckmesser vorgesehen und der dort herrschende Differenzdruck auf einen wählbaren Vorgabewert von beispielsweise 0,5 bar oder auf einen anderen Betrag eingestellt, der für optimalen Ablauf des Filtriervorganges am günstigsten ist.

Das zwischengespeicherte Filtrat kann gemäß Anspruch 4 ab Erreichen eines Vorgabewertes an den Filtereingang zurückgeführt werden, wozu laut Anspruch 5 bzw. 14 vorgabeabhängig ein Weg für das Filtrat automatisch geöffnet wird, auf dem es in einem Zwischenkreislauf von dem Vorschaltbehälter an den Filtereingang und zurück in den Vorschaltbehälter zirkuliert. Man hat es also in der Hand, eine bestimmte Charge wiederholt - z.B. dreimal oder öfter - im Zwischenkreislauf zu klären, bevor das Filtrat abgezogen wird.

Die Gestaltung von Anspruch 6 bzw. 16 sieht vor, daß vorgabeabhängig ein Weg für das Filtrat automatisch geöffnet wird, auf dem es wahlweise in einem Zwischenbehälter entweder zunächst abgefangen oder gleich direkt zur Verwertung weitergeleitet wird. Die Nutzung des Filtrats erfolgt mithin nicht blind, sondern in Kenntnis der z.B. laufend oder in gewünschten Abständen gemessenen aktuellen Filtratgüte, welche die Vorgaben bestimmt. Dazu können im Einklang mit Anspruch 7 bzw. 17 Vorschaltbehälter und Zwischenbehälter baulich vereinigt werden, namentlich unter Einbau einer schrägen Trennwand in einer gemeinsamen Tankeinheit, wahlweise mit einem Überlauf zu dem Zwischenbehälter. Diesem kann eine Rückpump- oder Hebestation zugeordnet sein.

In der Ausgestaltung nach Anspruch 8 wird zum Aufbau eines Filterkuchens auf dem Filter in der Anschwemmphase eine Schmutzflüssigkeit, insbesondere die zu filtrierende Flüssigkeit selbst, oder eine Spülflüssigkeit benutzt, so daß auf den Einsatz besonderer Filterhilfsmittel verzichtet werden kann.

Mit Vorteil wird ferner die zu filtrierende Flüssigkeit nach Anspruch 9 bzw. 18 vor der Zufuhr an den Filtereingang im vorgeschalteten Schmutzbehälter kontinuierlich durchmischt, beispielsweise mit einem bodennah eingebauten Rührwerk, das beim Füllen des Behälters zu laufen beginnt und erst zum Stillstand kommt, wenn er leer ist.

Zweckmäßig wird nach Anspruch 10 bzw. 19 ein Filter mit umlaufendem Endlos-Gewebeband eingesetzt, namentlich ein Klappbandfilter, dessen Regenerierung besonders einfach und schnell vor sich geht.

Das Herausfiltern der Feinstpartikel wird ferner wesentlich dadurch unterstützt, daß man gemäß Anspruch11 und 20 vor einer bzw. jeder Regenerierung des Filters eine Tiefenfiltration durchführt, indem man unter Verwendung geeigneter Steuermittel den Inhalt des Vorschaltbehälters unter Druck durch einen am Filter hoch aufgebauten Filterkuchen preßt. Die Abreinigung des Filters für die Wiederverwendung erfolgt nach dem Trocknen und Abwerfen des Filterkuchens vorteilhaft, indem man laut Anspruch 12 abfließendes Filtrat zur Spülung an die Unterseite des Filters leitet, wozu Anspruch 21 vorsieht, daß nach Schließen eines Abfuhrventils ein Abzweigventil im Abfuhrweg des Filtrats aufsteuerbar ist.

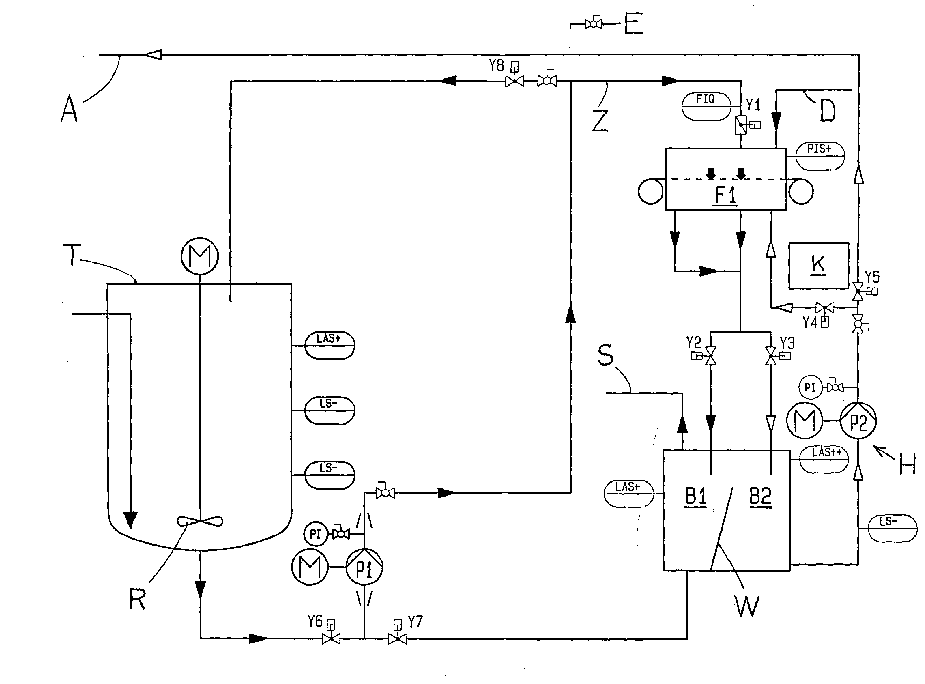

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Deren einzige Figur veranschaulicht ein Schema einer Anlage zur Durchführung des erfindungsgemäßen Verfahrens.

Zu der Anlage gehört bei der Sekundärschlamm-Aufbereitung allgemein eine (nicht gezeichnete) Hauptfilteranlage, die eine zu filtrierende Prozeßflüssigkeit in einen Tank T speist, dem Füllstands-Sensoren zugeordnet sind. Beispielsweise in der Nähe seines Bodens kann sich ein motorisch angetriebenes Rührwerk R befinden. Ein Auslaß führt über ein Absperrorgan Y2 zu einer Pumpe P1, von der aus eine Zufuhrleitung Z zum Eingangsventil Y1 eines Filters F1 geht. Dies ist allgemein ein Druckschlammfänger oder - wie im gezeichneten Beispiel schematisch angedeutet - vorteilhaft ein Klappbandfilter mit umlaufendem Endlos-Filterband, das beispielsweise ein Metall-, Nylonoder Polypropylen-Gewebe aufweist. Auch ein Vliesgewebe läßt sich einsetzen. Der Filter F1 kann aber auch ein Druckschlammfänger mit einer Glocke sein, in der gleichfalls getrocknet wird.

Eine typische Feinheit von 80...200 µm, vorzugsweise 90...110 µm, bewirkt beim Anfahren des Filtrierprozesses zwar bereits eine Brückenbildung für einen Filterkuchen, doch passieren während einer ersten Filterphase noch relativ viele Feinstpartikel den Filter F1. Die daher noch unzureichend gereinigte Flüssigkeit wird über eine Ventilanordnung Y2 bzw. Y3 in einen Auffangbehälter geleitet.

Im Ausführungsbeispiel ist dies eine in der Figur rechts unten dargestellte Tankeinheit, die (links) einen Vorschaltbehälter B1 hat, welchem (rechts) ein Zwischenbehälter B2 nachgeordnet ist, wobei oberhalb einer z.B. schrägen Trennwand W ein Überlauf vorhanden sein kann. Dem Zwischenbehälter B2 folgt eine Rück- oder Hebepumpe H. Die von einer Pumpe P2 geförderte Suspension kann bei geschlossenem Ventil Y5 und offenem Ventil Y4 an den Filter F1 gelangen, z.B. zur Bandspülung nach Austrag des Filterkuchens. Ansonsten fördert die Pumpe P2 das Filtrat bei geschlossenem Ventil Y4 durch das geöffnete Ventil Y5 zu einer Abfuhrleitung A hin. Zur Probeentnahme ist wenigstens ein Anschluß E vorhanden.

Im Betrieb gelangt die in den Behälter T eingebrachte Schmutzflüssigkeit aus ihm bei offenem Ventil Y6 (und geschlossenem Ventil Y7) unter dem Druck der Pumpe P1 entweder bei geöffnetem Ventil Y8 (und geschlossenem Ventil Y1) in den Schmutztank T zurück oder bei geschlossenem Ventil Y8 in die Zufuhrleitung Z zum geöffneten Einlaßventil Y1 des Filters F1. Die vorhandene Trübe wirkt als Anschwemm-Mittel auf dem Filterband. Dadurch baut sich allmählich durch zurückgehaltenen Schlamm ein wirksamer Filterkuchen auf dem Band auf. Das Filtrat wird in den Vorschaltbehälter B1 gespeist, bis darin der mit einem (schematisch angedeuteten) Sensor erfaßbare maximale Füllstand oder am Filter F1 ein Druckunterschieds-Schwellenwert erreicht ist, den man mit einem (ebenfalls angedeuteten) Differenzdruck-Sensor erfaßt. Bei Erreichen eines der beiden Schaltwerte wird die Förderung aus dem Behälter T unterbrochen.

Das im Vorschaltbehälter B1 vorhandene Volumen wird für sich verarbeitet oder weggepumpt. Fallweise kann ein Zwischenkreislauf gefahren werden, wobei die Flüssigkeit über das Ventil Y2 in den Vorschaltbehälter B1 und über das Ventil Y7 sowie die Zufuhrleitung Z an den Eingang Y1 des Filters F1 zurückläuft, um von dort erneut in den Vorschaltbehälter B1 geleitet zu werden.

Bei genügender Filtratqualität schließt Ventil Y2 und Ventil Y3 öffnet, so daß das vom Filter F1 kommende Filtrat in den anschließenden Behälter B2 gelangt. Sauberes Filtrat kann nun mit der Pumpe P2 über die Abfuhrleitung A ausgebracht und beispielsweise zu einer (nicht dargestellten) Zentralanlage gefördert werden. Man erzielt erfindungsgemäß sehr schnell eine gründliche Entfernung von Schwebstoffen.

Der Druckschlammfilter F1 wird auf diese Weise so lange betrieben, bis eine Regeneration notwendig wird. Vor deren Durchführung kann man aus dem Vorschaltbehälter B1 den Inhalt z.B. über eine Saugleitung S absaugen und ihn unter dem Druck der Pumpe P1 durch den jetzt hohen Filterkuchen hindurchpressen. Diese Tiefenfiltration sichert, daß eine Maximalmenge von Feinstpartikeln im Filterkuchen zurückgehalten wird; somit kann im System keine Aufkonzentration von Feinstteilchen stattfinden.

Zeigen die Meßwerte, daß ein dicker Filterkuchen nicht weiter aufnahmefähig ist, so wird der Druckschlammfilter F1 regeneriert, wozu der Betrieb unterbrochen und der Filter F1 entleert wird, um den Filterkuchen auf dem Filterband mit Druckluft aus einer Druckluftquelle D zu trocknen. Für den anschließenden automatischen Trockenaustrag wird der Filter F1 entleert, indem am Klappbandfilter das Band ausgefahren und bei geöffnetem Deckel z.B. mit einem Schaber, einer Bürste o.dgl. abgestreift wird. Der trockene Kuchen wird auf einen (schematisch angedeuteten) Schlammwagen K abgeworfen; gleichzeitig beginnt eine Bandspülung über P2/Y4, die restlichen Schmutz abführt. Der gereinigte Filter F1 ist nun neu benutzbar. Der nächste Zyklus wird zwecks effektiver Filtration ebenfalls wieder durch einen Anschwemmvorgang eingeleitet.

Zusammenfassend ist festzustellen, daß die Erfindung zum Einsatz vor allem zur Restentfeuchtung von filtergängigen Schlämmen einsetzbar ist. Apparativ bedient man sich normalerweise eines Druckschlammfilters, ferner zweier Auffangbehälter mit Umschaltarmaturen, diverser Sensoren und Steuereinrichtungen sowie der üblichen Pumpen und Verbindungsleitungen. Im Filter geschieht die Trennung von Prozeßflüssigkeit und Schlamm sowie dessen Trocknung. Je nach der gegebenen Filtrieraufgabe und abhängig von jeweiligen Betriebswerten der Filtratgüte kann das Filtrat entweder sogleich abgeführt oder an den Filtereingang von einem Vorschaltbehälter aus zurückgeleitet werden. In diesen gelangt das Filtrat während der Anschwemmphase und - soweit erwünscht oder erforderlich - während eines zu weiterer Klärung fortgesetzten Kreislaufs. Dagegen wird nach der Umschaltung auf die Filter-Durchlaufphase das Filtrat von einem Zwischenbehälter aufgenommen, aus dem eine Rückoder Hebepumpe das Filtrat zur Verwertung ableitet. Durch den besonderen Anschwemmvorgang und die nachfolgende Aufbereitung des Anschwemmfiltrates samt Tiefenfiltration wird die Aufkonzentration von Feinstpartikeln im System unterbunden.

Die Erfindung ist nicht auf die beschriebenen Mittel und Wege beschränkt, sondern in vielfältiger Weise abwandelbar. Man erkennt, daß eine bevorzugte Ausführungsform ein Verfahren und eine Vorrichtung zur Sekundärschlamm-Aufbereitung beim Filtrieren feindisperser Suspensionen vorsieht, wobei die zu filtrierende Schmutzflüssigkeit, die beispielsweise aus einem Rückspültank T mit einem Rührwerk R kommt und über eine Zufuhrleitung Z an den absperrbaren Eingang Y1 eines rückspülbaren Filters F1 gelangt, z.B. eines Klappbandfilters mit umlaufendem Endlos-Gewebeband. Anfangs wird man das Filtrat über ein Ventil Y2 in einen Vorschaltbehälter B1 leiten; sobald darin ein gegebener Füllstand oder am Filter F1 eine vorbestimmte Druckdifferenz erreicht ist, kann man das Filtrat zu weiterer Klärung und Steigerung der Filtratgüte in einem Pumpkreislauf Y7, P1 an den Filtereingang Y1 zurückführen. Alternativ wird der Filterausgang über ein Ventil Y3 auf einen Zwischenbehälter B2 umgeschaltet, dem eine Rückpump- oder Hebestation H zugeordnet sein kann; von dort kommt das saubere Filtrat unter dem Druck einer Pumpe P2 durch eine Abfuhrleitung A zur weiteren Verwertung. Die Behälter B1, B2 können unter Einbau einer z.B. schrägen Trennwand W vereinigt sein, gegebenenfalls mit einem Überlauf zum Zwischenbehälter B2. Vor einer Regenerierung des Filters F1 saugt man aus dem Vorschaltbehälter B1 den Inhalt z.B. durch eine Saugleitung S ab und preßt ihn zur Tiefenfiltration durch den hoch aufgebauten Filterkuchen hindurch, der mittels Druckluftzufuhr D getrocknet und dann ausgetragen wird, worauf man das Filterband spülen und den Filter F1 wieder einsetzen kann.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Abfuhrleitung
- B1: Vorschaltbehälter
- B2: Zwischenbehälter
- D: Druckluftzufuhr
- E: Probeentnahme
- F1: Filter
- H: Rück- bzw. Hebepumpe
- K: Schlammfänger
- M: Motore
- P1: Pumpe
- P2: Pumpe
- R: Rührwerk
- s: Saugleitung
- T: Schmutzbehälter/Tank
- W: Trennwand
- Y1: Einlaß(ventil)
- Y2: Einlaß(ventil)
- Y3: Einlaß(ventil)
- z: Zufuhrleitung

## Patentansprüche

1. Verfahren zur Sekundärschlamm-Aufbereitung beim Filtrieren feindisperser Suspensionen, unter Verwendung eines die zu filtrierende Flüssigkeit aufnehmenden Behälters (T), dem in einem Pumpkreislauf ein Filter (F1) nachgeordnet ist, dadurch **gekennzeichnet**, daß als Filter (F1) ein rückspülbarer Anschwemmfilter benutzt wird, daß dessen während einer Anschwemmphase abgehendes Filtrat bis zum Erreichen eines Vorgabewertes zwischengespeichert wird und daß in einer folgenden Filterphase Filtrat durch Weg-Umleitung zur Verwertung abgeführt wird.

2. Verfahren nach Anspruch 1, dadurch **gekennzeichnet**, daß als Vorgabewerte der am Filter (F1) herrschende Differenzdruck und/oder der Füllstand eines Vorschaltbehälters (B1) eingestellt bzw. abgetastet werden, dem das in der Anschwemmphase vom Filter (F1) abgehende Filtrat zugeleitet wird.

3. Verfahren nach Anspruch 2, dadurch **gekennzeichnet**, daß der am Filter (F1) herrschende Differenzdruck auf einen Vorgabewert von beispielsweise 0,5 bar eingestellt wird.

4. Verfahren nach einem der Ansprüche 1 bis 3, dadurch **gekennzeichnet**, daß das zwischengespeicherte Filtrat ab Erreichen eines Vorgabewertes an den Filtereingang (Y1) zurückgeführt wird.

5. Verfahren nach Anspruch 4, dadurch **gekennzeichnet**, daß vorgabeabhängig ein Weg (Y2, B1, Y7) für das Filtrat automatisch geöffnet wird, auf dem es in einem Zwischenkreislauf von dem Vorschaltbehälter (B1) an den Filtereingang (Y1) und zurück in den Vorschaltbehälter (B1) zirkuliert.

6. Verfahren nach einem der Ansprüche 1 bis 5, dadurch **gekennzeichnet**, daß vorgabeabhängig ein Weg (Y3, B2, Y5) für das Filtrat automatisch geöffnet wird, auf dem es wahlweise in einem Zwischenbehälter (B2) vorübergehend abgefangen oder direkt zur Verwertung weitergeleitet wird.

7. Verfahren nach Anspruch 6, dadurch **gekennzeichnet**, daß man Vorschaltbehälter (B1) und Zwischenbehälter (B2) baulich vereinigt, namentlich unter Einbau einer z.B. schrägen Trennwand (W) in einem gemeinsamen Behälter, wahlweise mit einem Überlauf (50) zu dem Zwischenbehälter (B2).

8. Verfahren nach einem der Ansprüche 1 bis 7, dadurch **gekennzeichnet**, daß zum Aufbau eines Filterkuchens auf dem Filter (F1) in der Anschwemmphase eine Schmutzflüssigkeit, insbesondere die zu filtrierende Flüssigkeit selbst, oder eine Spülflüssigkeit benutzt wird.

9. Verfahren nach einem der Ansprüche 1 bis 8, dadurch **gekennzeichnet**, daß die zu filtrierende Flüssigkeit vor der Zufuhr an den Filtereingang (Y1) im Schmutzbehälter (T) kontinuierlich durchmischt wird, z.B. mit einem darin bodennah angeordneten Rührwerk (R).

10. Verfahren nach einem der Ansprüche 1 bis 9, dadurch **gekennzeichnet**, man einen Filter (F1) mit umlaufendem Endlos-Gewebeband (66) einsetzt.

11. Verfahren nach einem der Ansprüche 1 bis 10, dadurch **gekennzeichnet**, daß vor einer Regenerierung des Filters (F1) eine Tiefenfiltration durchgeführt wird, indem man den Inhalt des Vorschaltbehälters (B1) durch einen am Filter (F1) hoch aufgebauten Filterkuchen preßt.

12. Verfahren nach einem der Ansprüche 1 bis 11, dadurch **gekennzeichnet**, daß über den Abfuhrweg (Y3, B2) fließendes Filtrat zur Rückspülung an die Unterseite des Filters (F1) geleitet wird.

13. Vorrichtung zur Sekundärschlamm-Aufbereitung nach einem der vorhergehenden Ansprüche, mit einem die zu filtrierende Flüssigkeit enthaltenden Behälter (T), dem in einem Pumpkreislauf eine Zufuhrleitung (Z) zu einem Filter (F1) mit absperrbarem Filtereingang (Y1) nachgeordnet ist, dadurch **gekennzeichnet**, daß der Filter (F1) ein rückspülbarer Anschwemmfilter ist, dem ein während einer Anschwemmphase Filtrat aufnehmender Vorschaltbehälter (B1) zugeordnet ist, daß Vorgabewerte für dessen Füllstand sowie den am Filter (F1) herrschenden Differenzdruck einstell- bzw. abtastbar sind und daß in einer Filterphase vorgabeabhängig Wege umsteuerbar sind, auf denen das Filtrat entweder an den Filtereingang (Y1) zurück- oder zur weiteren Verwertung abströmt.

14. Vorrichtung nach Anspruch 13, dadurch **gekennzeichnet**, daß vorgabeabhängig Mittel (Y2, Y7) zur Öffnung eines Weges für das Filtrat automatisch betätigbar sind, auf dem es in einem Zwischenkreislauf von dem Vorschaltbehälter (B1) an den Filtereingang (Y1) und zurück in den Vorschaltbehälter (B1) zirkuliert.

15. Vorrichtung nach Anspruch 13 oder 14, dadurch **gekennzeichnet**, daß am Filter (F1) ein Differenzdruckmesser vorgesehen und wählbare Vorgabewerte für die Umsteuerung auf den bzw. von dem Zwischenkreislauf einstellbar sind.

16. Vorrichtung nach einem der Ansprüche 13 bis 15, dadurch **gekennzeichnet**, daß vorgabeabhängig Mittel (Y3, Y5) zur Öffnung eines Weges für das Filtrat automatisch betätigbar sind, auf dem es in einem Zwischenbehälter (B2) wahlweise abfangbar oder direkt zur Verwertung weiterleitbar ist.

17. Vorrichtung nach einem der Ansprüche 13 bis 16, dadurch **gekennzeichnet**, daß Vorschaltbehälter (B1) und Zwischenbehälter (B2) baulich vereinigt sind, namentlich unter Einbau einer z.B. schrägen Trennwand (W) in einem gemeinsamen Behälter, wahlweise mit einem Überlauf zu dem Zwischenbehälter (B2).

18. Vorrichtung nach einem der Ansprüche 13 bis 17, dadurch **gekennzeichnet**, daß in dem Schmutzbehälter (T) eine Mischeinrichtung für die zu filtrierende Schmutzflüssigkeit vorhanden ist, z.B. ein bodennah eingebautes Rührwerk (R).

19. Vorrichtung nach einem der Ansprüche 13 bis 18, dadurch **gekennzeichnet,** daß als Filter (F1) ein Klappbandfilter mit umlaufendem Endlos-Gewebeband eingesetzt ist.

20. Vorrichtung nach einem der Ansprüche 13 bis 19, **gekennzeichnet** durch solche Steuermittel, daß vor einer Regenerierung des Filters (F1) durch einen daran hoch aufgebauten Filterkuchen der Inhalt des Vorschaltbehälters (B1) zur Tiefenfiltration hindurchpreßbar ist.

21. Vorrichtung nach einem der Ansprüche 13 bis 20, dadurch **gekennzeichnet**, daß nach Schließen eines Abfuhrventils (Y5) ein Abzweigventil (Y4) aufsteuerbar ist, um über den Abfuhrweg (Y3, B2) zuströmendes Filtrat zur Spülung der Unterseite des Filters (F1) an dieses heranzuführen.
